# EUROPÄISCHE PATENTANMELDUNG

(11) **EP 0 995 729 A1**
(43) Veröffentlichungstag der Anmeldung: **26.04.2000**
(21) Anmeldenummer: 99115858.5
(22) Anmeldetag: 12.08.1999
(51) Int. Cl.: C04B 28/26

(54) **Komposition zur Herstellung von Baustoffen**

(30) Priorität: 27.08.1998 BY 980811
(71) Anmelder: Karpus, Pavel Pavlovich, 320029 Dnepropetrovsk (UA)
(72) Erfinder: Karpus, Pavel Pavlovich, 320029 Dnepropetrovsk (UA); Pozdnyakov, Mikhail Mikhailovich, 212027 Mogilev (BY); Tikhonov, Lazar Avramovich, 246002 Gomel (BY)
(74) Vertreter: Haussingen, Peter

(57) **Zusammenfassung**

Die Erfindung bezieht sich auf die Zusammensetzung von Kompositionen für die Herstellung und die Fertigung verschiedener Baustoffe, wie beispielsweise Ziegelsteine (Vollziegel, Hohlziegel, Normalziegel, Blendziegel), Dachziegel, Verkleidungsplatten, Bausteine und einer Reihe von anderen Baustoffen mit günstigen Festigkeits- und ästhetischen Eigenschaften mit einem breiten Anwendungsgebiet, die ohne Wärmebehandlung hergestellt werden.
Erfindungsgemäß besteht die Komposition aus einem Bindemittel, einem Einkomponenten-Härtemittel und Füllstoff, wobei sie einen Kolloid-Mineralleim, vorzugsweise Wasserglas als Bindemittel, Natriumfluorosilikat als Einkomponenten-Härtemittel und sich während des Mischvorgangs aktivierende Abfallprodukte aus der Gewinnung und Verarbeitung von Karbonaten wie Kalk, Muschelkalk, Dolomit u. a. als Füllstoff aufweisen und aus den Bestandteilen mit den prozentualen Anteilen

| | |
|---|---|
| - Füllstoff | 84,2 - 84,8 |
| - Wasserglas | 13,5 - 13,9 |
| - Natriumfluorosilikat | 1,7 - 1,9 |

besteht.

## Beschreibung

Die Erfindung bezieht sich auf die Zusammensetzung von Kompositionen zur Herstellung und die Fertigung verschiedener Baustoffe, wie beispielsweise Ziegelsteine (Vollziegel, Hohlziegel, Normalziegel, Blendziegel), Dachziegel, Verkleidungsplatten, Bausteine und einer Reihe von anderen Baustoffen.

Bekannt sind verschiedene Mischungssysteme, bestehend aus Mineralleim (Wasserglas), Härtemittel verschiedener Zusammensetzung, Füllstoff, die zu einem Artikel durch Pressen mit einer Druckkraft von 49-77 kp/cm² geformt werden. Nach dem Trocknen und thermischer Behandlung beträgt das Raumgewicht eines Erzeugnisses 2000-2100 kg/m³ , wie beispielsweise in der Druckschrift US 3573940 beschrieben.

Einer der Nachteile bei der Herstellung von Baustoffen aus diesen Mischungssystemen besteht in einem hohen Energieaufwand, weil die Erzeugnisse eine hohe Brenntemperatur 1300°C voraussetzen, die Umwelt wird durch die BrennstoffVerbrennungsprodukte belastet.

Der der Erfindung nächstliegende Stand der Technik wird durch die Druckschrift UdSSR 722872 ausgewiesen, wobei ein Mischungssystem mit folgenden Massenanteilen der Bestandteile in Prozent gekennzeichnet ist:

| | |
|---|---|
| - Muschelkalk | 18 - 20 |
| - Löschkalk | 4 - 5 |
| - Flugasche | 4 - 5 |
| - Wasserglas | Rest |

Der Baustoff mit dieser Zusammensetzung hat eine niedrige Festigkeit, Feuchtigkeitsbeständigkeit und Frostbeständigkeit. Außerdem bedarf dieser Baustoff Brenntemperatur 1300°C, was zu einem hohen Energieaufwand führt.

Die genannten Nachteile sind durch eine geringe Reaktionsfreudigkeit der neu gebildeten Verbindungen und Fehlen eines starken Härtemittels zu erklären.

Die ästhetischen Eigenschaften vom Baustoff sind auch niedrig.

Die Aufgabe der Erfindung besteht in der Entwicklung einer Komposition für die Herstellung von Baustoffen aus Abfallprodukten bei der Verarbeitung von Kalk, Muschelkalk, Dolomit und anderen Karbonaten mit einer einfachen Aufbereitung unter Verwendung bekannter Verfahrenstechnik und einer Mindestmenge anderer Bestandteile, die u. a. Produkte einer vieltonnigen Produktion sind, aus der ein künstliches Baumaterial mit günstigen Festigkeits- und ästhetischen Eigenschaften mit einem breiten Anwendungsgebiet ohne Wärmebehandlung hergestellt wird.

Die Aufgabe wird durch die im Patentanspruch 1 aufgeführten Merkmale gelöst, bevorzugte Weiterbildungen ergeben sich aus den Unteransprüchen, wobei die Bestandteile der Komposition und die Komposition wie folgt in den Schritten
- mechanische Bearbeitung vom Füllstoff mit der Abscheidung von Fraktionen;
- Ausbildung des in der Fraktionszusammensetzung optimalen Füllstoffs;
- Anwendung von Kolloid-Mineralleim als Bindemittel,
- Anwendung eines starken Einkomponenten-Härtemittel;
- Einsatz von Pressverfahren ( einstufig / zweistufig ) für die Herstellung von Baustoffen unterzogen wird.

Das Wesen der Erfindung ist dadurch charakterisiert, daß hohe Festigkeits- und ästhetische Eigenschaften durch:
- die Anwendung der optimalen Korngröße für verschiedene Karbonate, die als Füllstoff verwendet werden,
- die mechanische Aktivierung des Füllstoffes bei der gemeinsamen homogenen Vermischung von Festkörpern und Herstellung einer Mischung bewirkt wird,
- den Wegfall von Funktionszusätzen, die als Verstärkungsmaterial verwendet werden,
   erzielt werden.

Die Komposition für die Herstellung von Baustoffen, bestehend aus Wasserglas, einem starken Einkomponenten-Härtemittel und Füllstoff, ist weiterhin dadurch charakterisiert, daß diese Natriumfluorosilikat als starkes Härtemittel und aktivierte Abfallprodukte bei der Gewinnung und Verarbeitung von Kalk, Muschelkalk, Dolomit als Füllstoff mit folgenden Massenanteilen der Bestandteile in Prozent aufweist:

| | |
|---|---|
| - aktivierter Füllstoff | 84,2 - 84,8 |
| - Wasserglas | 13,5 - 13,9 |
| - Natriumfluorosilikat | 1,7 - 1,9 |

Der Füllstoff ist ein Produkt aus der Gewinnung, mechanischen Be- und Verarbeitung von Kalk, Dolomit. Die Schüttdichte der einzelnen Kalkfraktionen wird durch folgende Daten gekennzeichnet:

| | | |
|---|---|---|
| - Fraktion 1,25 | - 2,5 mm | 780 kg/m³ |
| - Fraktion 0,63 | - 1,25 mm | 860 kg/m³ |
| - Fraktion 0,315 | - 0,63 mm | 980 kg/m³ |
| - Fraktion 0,14 | - 0,315 mm | 1020 kg/m³ |
| - Fraktion 0,074 | - 0,14 mm | 1130 kg/m³ |

Die steigende Schüttdichte bei der Verfeinerung der Körnung zeigt die Zerstörung der relativ großen Poren während der Zerkleinerung und die Minderung der Porigkeit erfolgt mit der Zunahme vom Feinstoffanteil. Die aus der erfindungsgemäßen Komposition gefertigten Baustoffe erhalten dadurch ihre hohen Festigkeitseigenschaften.

Die Schüttdichte der Mischung aus den sorgfältig vermischten Fraktionen der Körnungen 0,315 - 0,63 mm; 0,14 - 0,315 mm und 0,074 - 0,14 mm, die aus folgenden prozentualen Anteilen der Fraktionen zusammengesetzt wird:

| | | |
|---|---|---|
| - Fraktion 0,315 | - 0,63 mm | 55 |
| - Fraktion 0,14 | - 0,315 mm | 30 |
| - Fraktion 0,074 | - 0,14 mm | 15 |

beträgt 1320 kg/m³, was die Schüttdichte der schwersten Fraktion von 0,074 - 0,14 mm merklich übersteigt.

Das zeigt eine optimale Granulometrie der gewählten Zusammensetzung der Mischung, in dem intergranularer Zwischenraum mit Feinpartikeln gefüllt wird. Die Porigkeit des Systems nimmt ab, Kontakte innerhalb einer Raumeinheit nehmen zu, die eine wichtige Voraussetzung für die Bildung eines Baustoffes mit erhöhten Festigkeitseigenschaften darstellt.

Dagegen wird für die Herstellung von herkömmlichen Baustoffen ein Füllstoff mit der Korngröße 0,63 - 0,00 mm ohne fraktionierte Verteilung verwendet. Der erzielte Baustoff hat genormte Festigkeitseigenschaften (beispielsweise Normalziegel), steht aber in ästhetischer Hinsicht den mit fraktioniertem Füllstoft hergestellten nach.

Für die Komposition für die Herstellung von Baustoffen wird Kolloid-Mineralleim vorzugsweise aus Natron-Wasserglas auf Sodabasis eingesetzt.

Als Einkomponenten-Härtemittel wird vorzugsweise Natriumfluorosilikat verwendet.

Die Komposition zur Herstellung von Baustoffen wird wie folgt hergestellt:

Um eine gleichmäßige Härtemittelverteilung in der Mischung der Komposition zur Herstellung von Baustoffen zu erzielen, wird in eine Zerkleinerungs- und Mischkammer 25 Prozent der Füllstoffmenge eingebracht, dazu werden 100 Prozent der Härtemittelmenge zugegeben und die Mischung wird sorgfältig vermischt, danach wird der restliche Teil des Füllstoffes in die Kammer eingebracht und die Mischung wird fertiggestellt.

Das Bindemittel wird in die Mischung eingespritzt, um dessen gleichmäßige Verteilung in der Mischung und die Zunahme der Kontakte auf der benetzten Oberfläche zu gewährleisten.

Im Laufe des Mischvorgangs erfolgt die Aktivierung der Komposition. Durch die Zerkleinerungs- und Zermahlungsprozesse in der Mischung werden während des Mischvorgangs zusätzliche benetzbare Flächen der Füllstoffe gebildet; durch die neu gebildeten Fraktionen mit der maximalen Korngröße 0,6 mm erfolgt ein wirksamer Kontakt zwischen dem Bindemittel und den zusätzlich gebildeten Flächen der Füllstoffe in der Mischung, was letztendlich zur Verbesserung der Festigkeitseigenschaften des daraus erzeugten Baustoffes beiträgt.

Im Laufe des nachfolgenden Pressens und Trocknens der Komposition zur Herstellung von Baustoffen wird die Mischung in physikalischer und mechanischer Hinsicht fester und es werden wasserunlösliche Verbindungen gebildet.

Anhand nachfolgender Ausführungsbeispiele sind Festigkeitseigenschaften von Baustoffen aus der erfindungsgemäßen Komposition zur Herstellung von Baustoffen denen herkömmlicher Baustoffe gegenübergestellt.

### 1. Einstufiges Pressen, Presskraft: 80 kg/cm².

Die Komposition wurde aus folgenden Bestandteilen mit den prozentualen Anteilen:

| | |
|---|---|
| Muschelkalk | - 84,2 |
| Härtemittel: Natriumfluorosilikat | - 1,9 |
| Natron-Wasserglas | - 13,9 |

hergestellt.

Füllstoff: nicht fraktioniert, Korngröße 0,63 - 0,00 mm.

| Baustoff aus Komposition | Raumgewicht in kg/m³ | Druckfestigkeit (trocken) in kp/cm² | Wasseraufnahme in Prozent | Frostbeständigkeit Anzahl der Zyklen |
|---|---|---|---|---|
| erfindungsgemäß | 1994 | 130 | 10,3 | 15,0 |
| herkömmlich | 1350-1450 | 250-500 | 13-18 | 60 |

### 2. Zweistufiges Pressen

Erste Stute mit einer Presskraft von 50 kg/cm²
Zweite Stufe mit einer Presskraft von 150 - 350 kg/cm²,
Steigerung je 50 kg/cm²

Die Komposition wurde aus folgenden Bestandteilen mit den prozentualen Anteilen:

| | |
|---|---|
| Muschelkalk | - 84,8 |
| Härtemittel: Natriumfluorosilikat | - 1,7 |
| Natron-Wasserglas | - 13,5 |

hergestfellt.

Füllstoff: Muschelkalk, fraktioniert.

| Baustoff aus Komposition | Raumgewicht in kg/m³ | Druckfestigkeit (trocken) in kp/cm² | Wasseraufnahme in Prozent | Frostbeständigkeit Anzahl der Zyklen |
|---|---|---|---|---|
| erfindungsgemäß | 2012 | 290 | 4,7 | 50 |
| | 2138 | 302 | 4,6 | 50 |
| | 2187 | 313 | 4,5 | 55 |
| | 2187 | 314 | 4,5 | 55 |
| | 2187 | 316,5 | 4,5 | 55 |
| herkömmlich | 1350-1450 | 250-500 | 13-18 | 60 |

In einer Variante wurde die Komposition aus folgenden Bestandteilen mit den prozentualen Anteilen:

| | |
|---|---|
| Dolomitmehl | - 84,8 |
| Härtemittel: Natriumfluorosilikat | - 1,7 |
| Natron-Wasserglas | - 13,5 % |

hergestellt.

| Baustoff aus Komposition | Raumgewicht in kg/m³ | Druckfestigkeit (trocken) in kp/cm² | Wasseraufnahme in Prozent | Frostbeständigkeit Anzahl der Zyklen |
|---|---|---|---|---|
| erfindungsgemäß | 2065 | 329 | 4,6 | 50 |
| | 2080 | 389 | 4,3 | 50 |
| | 2090 | 415 | 4,0 | 55 |
| | 2140 | 326 | 4,6 | 52 |
| | 2140 | 346 | 4,4 | 52 |
| herkömmlich | 1350-1450 | 250-50 | 13-18 | 60 |

Die erzielten Ergebnisse der Festigkeitseigenschaften von Baustoffen, die gemäß den Ausführungsbeispielen aus der Komposition zur Herstellung von Baustoffen hergestellt wurden, zeigen in der Gegenüberstellung die Vorteile der erfindungsgemäßen Komposition.
Die Baustoffe aus der erfindungsgemäßen Komposition haben gute ästhetische Eigenschaften, sind feuchtigkeitsbeständig, beständig gegen biologische Faktoren und umweltfreundlich. Das Herstellungsverfahren erfolgt unter geringem Energieaufwand, verursacht keine Abfälle, schließt jegliche Emissionen und Umweltverschmutzung durch deren abfallfreie Technologien aus. Sie ist umweltfreundlich.

## Patentansprüche

1. Komposition für die Herstellung von Baustoffen, bestehend aus einem Bindemittel, einem Einkomponenten-Härtemittel und Füllstoff, dadurch gekennzeichnet,
daß sie einen Kolloid-Mineralleim, vorzugsweise Wasserglas als Bindemittel, Natriumfluorosilikat als EinkomponentenHärtemittel und sich während des Mischvorgangs aktivierende Abfallprodukte aus der Gewinnung und Verarbeitung von Karbonaten wie Kalk, Muschelkalk, Dolomit u. a. als Füllstoff aufweisen, wobei die Komposition aus folgenden Bestandteilen mit den prozentualen Anteilen
| | |
|---|---|
| - Füllstoff | 84,2 - 84,8 |
| - Wasserglas | 13,5 - 13,9 |
| - Natriumfluorosilikat | 1,7 - 1,9 |
besteht.

2. Komposition für die Herstellung von Baustoffen nach Anspruch 1, dadurch gekennzeichnet,
daß der Füllstoff nicht fraktioniert in einer Korngröße von 0,63 bis 0,00 mm eingesetzt wird.

3. Komposition für die Herstellung von Baustoffen nach Anspruch 1, dadurch gekennzeichnet,
daß der Füllstoff aus einer Mischung von Fraktionen gebildet wird.

4. Komposition für die Herstellung von Baustoffen nach Anspruch 1 und einem der Ansprüche 2 oder 3, dadurch gekennzeichnet,
daß der Füllstoff aus einer Mischung von drei Fraktionen mit einem prozentualen Anteil der Korngrößen 0,315-0,63 mm von 55, 0,14-0,315 mm von 30 und 0,074-0,14 mm von 15 besteht.

5. Herstellung von Baustoffen aus Kompositionen nach den Ansprüchen 1 bis 4, dadurch gekennzeichnet,
daß diese durch einstufiges Pressen mit einer Kraft von 80 kg/cm² erfolgt.

6. Herstellung von Baustoffen aus Kompositionen nach den Ansprüchen 1 bis 4, dadurch gekennzeichnet,
daß diese durch zweistufiges Pressen, wobei die erste Stufe mit einer Preßkraft von 50 kg/cm² und die zweite Stufe mit einer Preßkraft von 150 bis 350 kg/cm² bei einer schrittweisen Steigerung um jeweils 50 kg/cm² erfolgt.
